# EUROPEAN PATENT APPLICATION

(11) **EP 4 841 712 A1**
(43) Date of publication of application: **18.11.2026**
(21) Application number: 26178833.5
(22) Date of filing: 14.05.2026
(51) Int. Cl.: H01M 4/525, H01M 4/36, H01M 4/58, H01M 4/62, H01M 4/131, H01M 4/505, H01M 10/0525, H01M 4/02

(54) **LITHIUM SECONDARY BATTERY**

(30) Priority: 16.05.2025 KR 20250064039; 08.04.2026 KR 20260063562
(71) Applicant: SK On Co., Ltd., Seoul 03161 (KR)
(72) Inventor: KANG, Min Suk, Daejeon 34124 (KR); KANG, Hyun Sung, Daejeon 34124 (KR); DO, Ji Yae, Daejeon 34124 (KR); BEAK, Min Cheol, Daejeon 34124 (KR)
(74) Representative: Stolmár & Partner Patentanwälte PartG mbB

(57) **Abstract**

A lithium secondary battery according to the present disclosure includes a cathode including a cathode active material including first lithium-metal oxide particles containing iron and second lithium-metal oxide particles containing nickel, and an anode disposed opposite the cathode. The peak area ratio in the discharge graph of the lithium secondary battery may fall within a predetermined range. The capacity characteristics, cycle life characteristics, and heat generation characteristics of the lithium secondary battery may be improved.

## Description

### [BACKGROUND OF THE INVENTION]

### 1. Field of the Invention

The disclosure of the present application relates to a lithium secondary battery, and more particularly, to a lithium secondary battery including a cathode active material.

### 2. Description of the Related Art

Secondary batteries are batteries that can be repeatedly charged and discharged. With the development of information, communication, and display industries, they have been widely applied as power sources for portable electronic communication devices such as camcorders, mobile phones, and laptop PCs. Examples of secondary batteries may include a lithium secondary battery, a nickelcadmium battery, and a nickel-hydrogen battery. Among these, the lithium secondary battery has been actively developed and applied due to its high operating voltage, high energy density per unit weight, and advantages in charging speed and weight reduction.

The lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

As a cathode active material included in the cathode, an LFP-based active material having an olivine structure, a lithium cobalt oxide (LCO)-based active material having a layered structure, a nickel cobalt manganese (NCM)-based active material, a nickel cobalt aluminum (NCA)-based active material, and a lithium manganese oxide (LMO)-based active material having a spinel structure may be used. Although lithium iron phosphate (LFP)-based active materials may be utilized in terms of cost competitiveness or safety, the capacity and energy density thereof are lower than those of other types of active materials. Even if factors such as the crystal size, BET, and doping elements of the lithium iron phosphate-based active materials are adjusted, problems such as poor fast-charging characteristics due to high resistance and reduced long-term reliability caused by leaching of the doping elements still exist. Therefore, a secondary battery having improved capacity, energy density, and charging characteristics is required.

### [SUMMARY OF THE INVENTION]

An object of the present disclosure is to provide a secondary battery having improved electrical characteristics and cycle life characteristics.

A lithium secondary battery according to embodiments of the present disclosure includes: a cathode including a cathode active material including first lithium-metal oxide particles containing iron and second lithium-metal oxide particles containing nickel; and an anode disposed opposite the cathode. The peak area ratio of the lithium secondary battery according to Equation 1 below is 1 to 7.5. [Equation 1] $Peak area ratio = A 1 / A 2$

In Equation 1, A1 denotes the peak area value of the region from a predetermined discharge start voltage to 4.1 V in a discharge graph representing the change in charge (dQ/dV) according to the voltage (V) drop while discharging from the predetermined discharge start voltage of the lithium secondary battery, and A2 denotes the peak area value of the region from 4.1 V to 3.9 V in the discharge graph.

According to exemplary embodiments, the discharge start voltage may be 4.3 V, and the discharge may be a constant-current discharge at 0.1C.

According to exemplary embodiments, the weight ratio of the content of the second lithium-metal oxide particles to the content of the first lithium-metal oxide particles may be 0.3 to 2.5.

According to exemplary embodiments, the content of the first lithium-metal oxide particles may be 30% by weight to 70% by weight based on the total weight of the cathode active material.

According to exemplary embodiments, the first lithium-metal oxide particles may further include at least one of Mn, Ti and V.

According to exemplary embodiments, the first lithium-metal oxide particles may include a core doped with at least one of Mn, Ti and V, and a carbon coating formed on the core.

According to exemplary embodiments, the first lithium-metal oxide particles may include manganese, and a molar percentage of the manganese content relative to the total content of iron and manganese may be 40% to 80%.

According to exemplary embodiments, the second lithium-metal oxide particles may further include at least two of Co, Mn, Al, Na, Ca, Nb, Ta, Mo, Zr, Ti, Cr, Cu, Zn, Sn, Ge, Ga, B, Mg, Ba, Si, Y, W, V and Sr.

According to exemplary embodiments, the second lithium-metal oxide particles may have the form of a secondary particle in which primary particles are agglomerated.

According to exemplary embodiments, the second lithium-metal oxide particles may include a first element present at grain boundaries of the primary particles and within the primary particles, and the first element may include at least one of Al, Ga, V, Nb, Ta, Ti, Zr, Mg, Ca, Sr, Ba, Sc and Y.

According to exemplary embodiments, the second lithium-metal oxide particles may include a second element present on the outer surface of the secondary particle, and the second element may include at least one of B, Si, Fe, Cu, Zn, Cr, Mo and W.

According to exemplary embodiments, the second lithium-metal oxide particles may include cobalt and manganese, and the molar percentage of the nickel content relative to the total content of nickel, cobalt, and manganese may be 70% to 95%.

According to exemplary embodiments, the peak area ratio may be 2 to 5.5.

According to exemplary embodiments, the first lithium-metal oxide particles may have a median particle diameter (D50) of 0.5 µm to 2 µm.

According to exemplary embodiments, the second lithium-metal oxide particles may have a median particle diameter (D50) of 10 µm to 20 µm.

The ratio of the peak area of the discharge graph of the lithium secondary battery according to an embodiment of the present disclosure may fall within a predetermined range. Accordingly, the capacity characteristics, room-temperature/low-temperature cycle life characteristics, rate characteristics, and heat dissipation characteristics of the lithium secondary battery may be improved.

### [BRIEF DESCRIPTION OF THE DRAWINGS]

The above and other objects, features and advantages of the present disclosure will be more clearly understood from the following detailed description taken in conjunction with the accompanying drawings, in which:
FIGS. 1 and 2 are a schematic plan view and a schematic cross-sectional view, respectively, of a lithium secondary battery according to exemplary embodiments; and
FIG. 3 is a diagram illustrating a discharge graph according to an exemplary embodiment and a comparative example.

### [DETAILED DESCRIPTION OF THE INVENTION]

The embodiments of the present disclosure provide a lithium secondary battery (hereinafter also abbreviated as a "secondary battery") having improved electrical characteristics and cycle life characteristics.

Hereinafter, embodiments of the present disclosure will be described in detail with reference to the accompanying drawings. However, the embodiments are merely illustrative, and the present disclosure is not limited to the specific embodiments described as examples.

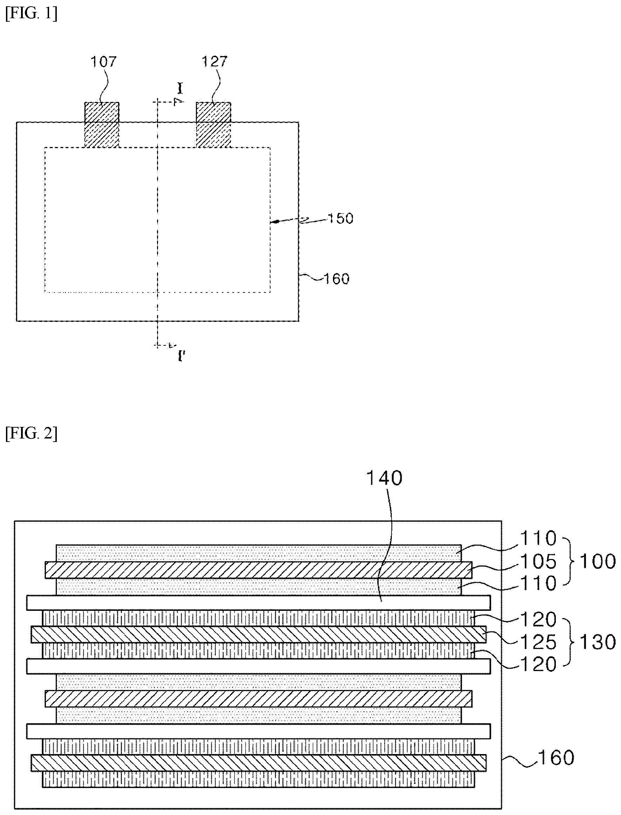

FIGS. 1 and 2 are a schematic plan view and a schematic cross-sectional view, respectively, of a lithium secondary battery according to exemplary embodiments; and
Referring to FIGS. 1 and 2, the lithium secondary battery includes a cathode 100 and an anode 130 disposed opposite the cathode 100. A separator 140 may be interposed between the cathode 100 and the anode 130.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector may also include aluminum or stainless steel having a surface treated with carbon, nickel, titanium, or silver.

The cathode active material layer 110 may include a cathode active material. The cathode active material may include a compound capable of reversibly intercalating and deintercalating lithium ions.

According to exemplary embodiments, the cathode active material may include first lithium-metal oxide particles containing iron and second lithium-metal oxide particles containing nickel.

For example, the first lithium-metal oxide particles may include lithium and iron (Fe) and may further include other metal elements. For example, the second lithium-metal oxide particles may include lithium and nickel (Ni) and may further include other metal elements and/or non-metal elements.

According to exemplary embodiments, the first lithium-metal oxide particles may include a lithium iron phosphate compound. The lithium iron phosphate compound may have an olivine structure and may exhibit high thermal and chemical stability. Therefore, heat generation may be suppressed even in instantaneous high-voltage or high-current environments during charging and discharging of the secondary battery. In addition, the lithium iron phosphate compound may have high structural stability and may suppress damage such as cracking of the particles caused by repeated charging and discharging, physical shock, or side reactions. Accordingly, the cycle life characteristics of the secondary battery at low temperatures may be improved.

According to exemplary embodiments, the first lithium-metal oxide particles may further include at least one of Mn, Ti, and V.

According to exemplary embodiments, the first lithium-metal oxide particles may be represented by Formula 1 below.

[Formula 1] (Liₐ₁Fe_{b1}M1_{c1}M2_{d1})Pₑ₁O₄

In Formula 1, M1 may be at least one of Ti, V and Mn, and M2 may be at least one of Ti, V, Mg, Ca, Sr, Y, Zr, Ba, Ni and Co. In Formula 1, a1, b1, c1, d1 and e1 may satisfy 1.0≤a1≤1.05, 0.2≤b1≤0.6, 0.4≤c1≤0.8, 0<d1≤0.5, and 0.96≤e1<1.04.

In some embodiments, the first lithium-metal oxide particles may be represented by Formula 1-1 below.

[Formula 1-1] (Liₐ₁Fe_{b1}Mn_{c1}M2_{d1})Pₑ₁O₄

In Formula 1-1, M2 may be at least one of Ti, V, Mg, Ca, Sr, Y, Zr, Ba, Ni and Co. In Formula 1-1, a1, b1, c1, d1 and e1 may satisfy 1.0≤a1≤1.05, 0.3≤b1≤0.5, 0.5≤c1≤0.7, 0<d1≤0.5, and 0.96≤e1<1.04.

In some embodiments, in Formula 1 or Formula 1-1, M2 may be Ti and V. In Formula 1 or Formula 1-1, d may denote the mole fraction of the sum of Ti and V. For example, the first lithium-metal oxide particles may include Mn, Ti and V together.

When the first lithium-metal oxide particles include Mn, Ti and V together, an additional path for migration of lithium ions may be ensured, thereby improving lithium ion conductivity even at low temperatures. Therefore, the charge and discharge capacity and output characteristics of the secondary battery may be improved under a low-temperature environment.

The chemical structure represented by Formula 1 or Formula 1-1 indicates a bonding relationship among elements included in the olivine structure or the crystal structure of the first lithium-metal oxide particles and does not exclude the presence of additional elements. For example, M1 and M2 may serve as the main active elements of the cathode active material. Formula 1 is provided to represent the bonding relationship among the main active elements and should be understood as encompassing the introduction or substitution of additional elements.

For example, auxiliary elements may be further included, which are added to the main active elements to enhance the chemical stability of the crystal structure. The auxiliary element may be incorporated into the crystal structure together with the main active elements to form bonds, and it should be understood that this case is also included within the chemical structure range represented by Formula 1 or Formula 1-1.

The auxiliary element may include, for example, at least one selected from the group consisting of Na, Hf, Ta, Cr, Cu, Ag, Ga, C, Si, Ra, P and S. The auxiliary element may also act as an auxiliary active element that contributes to the capacity/output activity of the cathode active material together with, for example, Fe, Ti, Mn or V.

According to exemplary embodiments, the first lithium-metal oxide particles may include manganese (Mn). For example, manganese (Mn) may be substituted at the iron (Fe) site of the first lithium-metal oxide particles, and as a ratio of manganese to iron is adjusted, the electrical characteristics during the discharge process of the secondary battery may be improved.

According to exemplary embodiments, the content of manganese in the first lithium-metal oxide particles (for example, the molar percentage of manganese relative to the total molar amount of iron and manganese) may be 40% to 80%. In some embodiments, the manganese content in the first lithium-metal oxide particles may be 45% to 75%, 48% to 72%, or 50% to 70%. Within the above range, a secondary battery having improved cycle life characteristics may be implemented while maintaining improved energy density and low-temperature characteristics.

For example, the mole fraction of manganese relative to the total molar amount of iron and manganese may be expressed as a molar ratio of Mn/(Mn+Fe).

According to exemplary embodiments, the first lithium-metal oxide particles may include a core including a lithium-metal oxide and a carbon coating formed on the core.

For example, the core may include the above-described lithium iron phosphate compound. For example, the core may include a compound represented by Formula 1 or Formula 1-1. The core may provide cathode activity to the lithium-metal oxide particles.

According to exemplary embodiments, the core may be doped with at least one of Ti, V and Mn. For example, the core may be doped with Ti, V and/or Mn. Accordingly, a lithium migration path may be sufficiently ensured even when mixed with the second lithium-metal oxide particles described below, and thus the electrical characteristics of the secondary battery in various environments (e.g., high temperature and low temperature) may be improved.

In some embodiments, the content of the doping metal in the core may be 300 ppm to 4,000 ppm, 500 ppm to 3,000 ppm, or 700 ppm to 2,500 ppm based on the total weight of the core. Within this range, the ion conductivity and low-temperature characteristics of the cathode active material may be further improved.

For example, the carbon coating may be uniformly formed on the outer surface of the core. The carbon coating may improve the stability and electronic conductivity of the secondary battery. In addition, direct contact between the core and the electrolyte may be blocked by the carbon coating, thereby preventing a decrease in the capacity and output of the secondary battery due to damage to the core or irreversible consumption of the electrolyte. Accordingly, the cycle life characteristics of the secondary battery may be improved.

In some embodiments, the carbon coating may include amorphous carbon such as hard carbon, soft carbon, calcined coke, mesophase pitch carbide, and/or crystalline carbon such as natural graphite or artificial graphite. These may be used alone or in combination of two or more thereof.

In some embodiments, the carbon coating may have a thickness of 1 nm to 50 nm, 1.5 nm to 30 nm, or 2 nm to 10 nm. Within the above range, the improved charge and discharge capacity and output characteristics of the secondary battery may be maintained.

For example, the thickness of the carbon coating may be the arithmetic mean of values obtained by measuring the cross-section of the particle using scanning electron microscopy (SEM) or transmission electron microscopy (TEM) and measuring the thickness of the carbon coating in 30, 50, or 100 or more regions of the cross-sectional image.

According to exemplary embodiments, the first lithium-metal oxide particles may have a median particle diameter (D50) of 0.5 µm to 2 µm. In some embodiments, the median particle diameter (D50) of the first lithium-metal oxide particles may be 0.7 µm to 1.8 µm or 0.8 µm to 1.5 µm. Within this range, the first lithium-metal oxide particles may be uniformly mixed with the second lithium-metal oxide particles described below, thereby ensuring the reproducibility of the discharge graph of the secondary battery.

The "median particle diameter (D50)" may be a particle diameter at a volume fraction of 50% in a volume-based particle size distribution obtained by cumulatively summing particles in ascending order of particle diameter. The particle diameter may refer to the longest diameter or length.

According to exemplary embodiments, the first lithium-metal oxide particles may have the form of a single particle, a secondary particle, or a mixture thereof. The single particle and the secondary particle may be distinguished based on the morphology of the particles. For example, the single particle and the secondary particle may be identified based on cross-sectional images of the particles obtained using a scanning electron microscope (SEM).

The secondary particle may refer to a particle in which a plurality of primary particles are agglomerated and observed or regarded as substantially one particle. For example, in the case of the secondary particle, the boundaries of the primary particles may be observed in the SEM cross-sectional image. For example, the secondary particle may include more than 10, 30 or more, 50 or more, or 100 or more primary particles agglomerated together.

The single particle may refer to a monolithic particle that is not an aggregate. The single particle is used to exclude a secondary particle structure in which 10 or more primary particles are agglomerated to substantially form a single particle shape, but it does not exclude a form in which fewer than 10 individual particles are adjacent and attached to each other. For example, in the case of the single particle, unlike the secondary particle, the boundaries of the primary particles may not be observed in the SEM cross-sectional images.

According to exemplary embodiments, the second lithium-metal oxide particles may include a lithium-nickel metal oxide. The second lithium-metal oxide may further include at least one of cobalt (Co), manganese (Mn), and aluminum (Al).

According to exemplary embodiments, the second lithium-metal oxide particles may include at least two of Co, Mn, Al, Na, Ca, Nb, Ta, Mo, Zr, Ti, Cr, Cu, Zn, Sn, Ge, Ga, B, Mg, Ba, Si, Y, W, V and Sr. For example, the second lithium-metal oxide particles may include at least three, four, or five of the above-described elements. For example, the elements may be included as doping elements or coating elements. As the number of types of elements included in the second lithium-metal oxide particles increases, the ion migration paths of lithium may be diversified, and accordingly, the low-temperature cycle life characteristics of the secondary battery may be improved.

According to exemplary embodiments, the second lithium-metal oxide particles may be represented by Formula 2 below. For example, the second lithium-metal oxide particles may include a layered structure or a crystal structure represented by Formula 2 below.

[Formula 2] Liₐ₂NiₓM1'_{b2}M2'_{c2}O_{2+y}

In Formula 2, M1' may be at least one of Co, Mn and Al, and M2' may be at least one of Al, Na, Ca, Nb, Ta, Mo, Zr, Ti, Cr, Cu, Zn, Sn, Ge, Ga, B, Mg, Ba, Si, Y, W, V and Sr. In Formula 2, a2, x, b2, c2 and y may satisfy 0.9≤a2≤1.2, 0.6≤x≤0.99, 0.01≤b2≤0.4, 0<c2≤0.5, and -0.5≤y≤0.1.

According to exemplary embodiments, the second lithium-metal oxide particles may include a layered structure or a crystal structure represented by Formula 2-1 below.

[Formula 2-1] Liₐ₂NiₓCo_{b2}Mn_{c2}M2_{d2}O_{2+y}

In Formula 2-1, M2 may be at least one of Al, Na, Ca, Nb, Ta, Mo, Zr, Ti, Cr, Cu, Zn, Sn, Ge, Ga, B, Mg, Ba, Si, Y, W, V and Sr. In Formula 2-1, a2, x, b2, c2 and y may satisfy 0.9≤a2≤1.2, 0.7≤x≤0.95, 0.01≤b2≤0.2, 0.01≤c2≤0.2, 0<d2≤0.5, and -0.5≤y≤0.1.

The chemical structure represented by Formula 2 or Formula 2-1 indicates a bonding relationship among elements included in the layered or the crystal structure of the second lithium-metal oxide particles and does not exclude the presence of additional elements. For example, M1' may include Co and/or Mn, and Co and Mn may serve as the main active elements of the cathode active material. Formula 2 is provided to represent the bonding relationship among the main active elements and should be understood as encompassing the introduction or substitution of additional elements.

For example, auxiliary elements may be further included, which are added to the main active elements to enhance the chemical stability of the lithium-transition metal oxide particles or the layered structure/crystal structure. The auxiliary elements may be incorporated into the layered structure/crystal structure together with the main active elements to form bonds, and it should be understood that this case is also included within the chemical structure range represented by Formula 2.

The auxiliary element may include at least one selected from the group consisting of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act as an auxiliary active element that contributes to the capacity/output activity of the cathode active material together with, for example, Co or Mn, such as Al.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating elements or the doping elements.

The coating element or the doping element may be present on the surface of the lithium-nickel metal oxide particles or may penetrate through the surface of the second lithium-nickel metal oxide particles to be incorporated into the bonding structure represented by Formula 2 or Formula 2-1.

According to exemplary embodiments, the second lithium-metal oxide particles may include a nickel-cobalt-manganese (NCM)-based lithium oxide. For example, an NCM-based lithium oxide with an increased content of nickel may be used.

Nickel (Ni) may serve as a transition metal associated with the output and capacity of the lithium secondary battery. Therefore, as lithium-metal oxide particles having a high-Ni composition are employed, the capacity characteristics of the secondary battery may be improved.

For example, the second lithium-metal oxide particles may include cobalt (Co) to maintain electrical conductivity, and may include manganese (Mn) to improve cycle life stability and capacity retention characteristics.

According to exemplary embodiments, the content of nickel in the second lithium-metal oxide particles (e.g., the molar percentage of nickel based on the total molar amount of nickel, cobalt and manganese) may be 70% or more, 75% or more, or 80% or more. In some embodiments, the content of nickel in the second lithium-metal oxide particles may be 70% to 95%, 75% to 92%, 78% to 90%, or 80% to 88%. For example, the mole fraction of nickel based on the total molar amount of nickel, cobalt and manganese may be expressed as Ni/(Ni+Co+Mn). Within this range, the capacity characteristics, rate characteristics, and cycle life characteristics of the secondary battery may be improved simultaneously.

According to exemplary embodiments, the second lithium-metal oxide particles may have the form of a secondary particle in which primary particles are agglomerated.

The secondary particle form may represent the secondary particle described above. For example, the secondary particle may refer to a particle in which a plurality of primary particles are agglomerated and observed or regarded as substantially one particle. For example, in the case of the secondary particle, the boundaries of the primary particles may be observed in the SEM cross-sectional image. For example, the secondary particle may include more than 10, 30 or more, 50 or more, or 100 or more primary particles agglomerated together.

According to exemplary embodiments, the second lithium-metal oxide particles may include a first element present at the grain boundaries of the primary particles and within the primary particles. For example, the first element may serve as a doping element for the second lithium-metal oxide particles.

According to exemplary embodiments, the first element may include two or more different elements. For example, the first element may include three or more different elements.

According to exemplary embodiments, the first element may include at least one of Al, Ga, V, Nb, Ta, Ti, Zr, Mg, Ca, Sr, Ba, Sc and Y. In some embodiments, the first element may include at least one of Al, V, Nb, Ti, Zr, Sc and Y.

The high-temperature stability of the second lithium-metal oxide particles including the first element may be improved and electrical conductivity may be maintained, thereby improving the thermal stability and cycle life characteristics of the secondary battery.

According to exemplary embodiments, the second lithium-metal oxide particles may include a second element present on the outer surface of the secondary particle. For example, the second element may serve as a coating element of the second lithium-metal oxide particles.

In some embodiments, the second element may include two or more different elements.

According to exemplary embodiments, the second element may include at least one of B, Si, Fe, Cu, Zn, Cr, Mo and W. In some embodiments, the second element may include at least one of B, Zn, Mo and W.

Contact between the second lithium-metal oxide particles including the second element and the electrolyte may be suppressed, thereby improving chemical stability. Accordingly, the cycle life characteristics of the secondary battery may be further improved.

In some embodiments, the content of the first element in the second lithium-metal oxide particles may be 300 ppm to 4,000 ppm, 500 ppm to 3,000 ppm, or 700 ppm to 2,500 ppm based on the total weight of the second lithium-metal oxide particles. Within this range, the structural stability of the cathode active material may be further improved.

In some embodiments, the content of the second element in the second lithium-metal oxide particles may be 300 ppm to 4,000 ppm, 500 ppm to 3,000 ppm, or 700 ppm to 2,500 ppm based on the total weight of the second lithium-metal oxide particles. Within this range, the chemical stability of the cathode active material may be further improved.

According to exemplary embodiments, the second lithium-metal oxide particles may have a median particle diameter (D50) of 10 µm to 20 µm. In some embodiments, the median particle diameter (D50) of the second lithium-metal oxide particles may be 10.5 µm to 18 µm or 11 µm to 15 µm. Within this range, the uniformity of the cathode active material may be ensured.

According to exemplary embodiments, a weight ratio of the first lithium-metal oxide particles to the second lithium-metal oxide particles may be adjusted.

According to exemplary embodiments, the weight ratio of the content of the second lithium-metal oxide particles to the content of the first lithium-metal oxide particles may be 0.3 to 2.5. In some embodiments, the weight ratio of the content of the second lithium-metal oxide particles to the content of the first lithium-metal oxide particles may be 0.35 to 2.45, 0.38 to 2.40, 0.40 to 2.38, or 0.42 to 2.35.

According to exemplary embodiments, the content of the first lithium-metal oxide particles may be 25% by weight ("wt%") to 75 wt%, 28 wt% to 72 wt%, or 30 wt% to 70 wt% based on the total weight of the cathode active material.

According to exemplary embodiments, the content of the second lithium-metal oxide particles may be 25 wt% to 75 wt%, 28 wt% to 72 wt%, or 30 wt% to 70 wt% based on the total weight of the cathode active material.

Within the above range, the cycle life characteristics of the secondary battery may be further improved. For example, if the weight ratio deviates from the above range, a change in discharge efficiency due to the temperature of the secondary battery may increase, and power loss and heat generation due to the charge and discharge rate may increase, which may degrade the cycle life characteristics of the secondary battery.

The anode 130 may include an anode current collector 125 and an anode active material layer 120 formed on at least one surface of the anode current collector 125.

For example, the anode current collector 125 may include copper foil, nickel foil, stainless steel foil, titanium foil, nickel foam, copper foam, or a polymer substrate coated with a conductive metal. These may be used alone or in combination of two or more thereof. For example, the anode current collector 125 may have a thickness of 10 µm to 50 µm.

For example, the anode active material layer 120 may include an anode active material.

The anode active material may include a material capable of absorbing and releasing lithium ions. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin-film layer may also be used as the anode active material layer.

Elements contained in the lithium alloy may include aluminum, zinc, bismuth, cadmium, antimony, silicon, lead, tin, gallium or indium, etc.

The silicon-containing active material may provide further increased capacity characteristics. The silicon-containing active material may include Si, SiOₓ (0<x<2), a silicon-carbon composite, a metal-doped silicate, or SiOₓ (0<x<2). The metal may include lithium and/or magnesium.

For example, the anode active material may be dispersed in a solvent to prepare an anode slurry. The anode slurry may be coated on the anode current collector, and then dried and roll-pressed to fabricate an anode. The anode slurry may further include a binder, and optionally may further include a conductive material, a thickener and the like.

In some embodiments, the anode may include an anode active material layer in the form of a lithium metal formed through a deposition/coating process.

Non-limiting examples of the solvent for the anode slurry may include water, purified water, deionized water, distilled water, ethanol, isopropanol, methanol, acetone, n-propanol, t-butanol, etc.

The above-described materials that can be used when preparing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

In one embodiment, the separator 140 may be interposed between the cathode 100 and the anode 130. The separator 140 may be configured to prevent an electrical short-circuit between the cathode 100 and the anode 130, and to allow the flow of ions.

The separator 140 may include a porous polymer film or a porous non-woven fabric. The porous polymer film may include a polyolefin polymer such as an ethylene polymer, a propylene polymer, an ethylene/butene copolymer, an ethylene/hexene copolymer, or an ethylene/methacrylate copolymer. The porous non-woven fabric may include glass fibers having a high melting point, polyethylene terephthalate fibers and the like.

The separator 140 may also include a ceramic material. For example, inorganic particles may be coated on the polymer film or dispersed in the polymer film to improve heat resistance.

The separator 140 may have a single-layer or multilayer structure including the above-described polymer film and/or non-woven fabric.

According to exemplary embodiments, an electrode assembly 150 may be defined by the cathode 100, the anode 130, and the separator 140. For example, the electrode assembly 150 may be formed by winding, stacking, z-folding, or stack-folding the separator 140.

In some embodiments, the electrode assembly 150 may have a jelly roll form formed by winding or z-folding the separator. In one embodiment, the electrode assembly 150 may be formed by repeatedly stacking the cathode 100, the anode 130, and the separator 140, which are cut or separated from each other for each layer.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt as an electrolyte and an organic solvent, the lithium salt may be represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be exemplified.

The organic solvent may include an organic compound which has sufficient solubility for the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent. As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, γ-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 1, electrode tabs (cathode tabs and anode tabs) may protrude from each cathode current collector 105 and each anode current collector 125, respectively, which belong to each electrode cell, and may extend to one end portion of the case 160. The electrode tabs may be welded together with the one end portion of the case 160 to be connected with electrode leads (a cathode lead 107 and an anode lead 127) that extend or are exposed to the outside of the case 160.

In FIG. 1, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical, prismatic, pouch, or coin type using a can.

According to exemplary embodiments, a ratio of peak areas in the discharge graph of the lithium secondary battery may be controlled.

For example, the discharge graph may represent a graph during the initial discharge process of the lithium secondary battery. For example, the initial discharge may represent a discharge in a process of verifying the performance of the lithium secondary battery after the formation charge-discharge for forming an interface layer in the manufacturing process of the lithium secondary battery. For example, the initial discharge may represent the 1st discharge, the 2nd discharge, or each of the 3rd to 10th discharges in the charge-discharge process for verifying the performance of the lithium secondary battery. In one embodiment, the initial discharge may represent the 1st discharge.

For example, the discharge graph may represent a graph during the process of charging the lithium secondary battery with constant current-constant voltage (CC-CV) and then discharging it with constant current (CC). For example, the amount of charge change according to voltage drop may be measured while performing CC-CV charging of the lithium secondary battery to a predetermined discharge start voltage and then proceeding with CC discharge. The measured values may be represented as a graph to show the discharge graph. For example, after CC-CV charging to a voltage corresponding to a state of charge (SOC) of 100%, the voltage may be set as the discharge start voltage. For example, CC discharge may be performed to a voltage where the SOC reaches 0%, and the voltage may be set as the discharge end voltage.

According to exemplary embodiments, the discharge start voltage may be 4.3 V, and the discharge may be constant-current discharge at 0.1C. For example, the discharge end voltage may be 3.0 V. For example, after charging the lithium secondary battery to 4.3 V, constant-current discharge may be performed until the voltage reaches 3.0 V using a current corresponding to 10% of the rated capacity of the lithium secondary battery as the discharge current. The discharge graph may be represented by measuring the change in charge according to the voltage drop during the constant-current discharge process.

According to exemplary embodiments, the discharge graph may represent the change in charge according to voltage.

According to exemplary embodiments, peak area values in predetermined regions of the discharge graph may be calculated, and the peak area ratio may be obtained from the peak area values. For example, a first region and a second region within a predetermined voltage range may be defined in the discharge graph, and the peak area ratio may be calculated from the peak area values of the first region and the second region. For example, the first region may represent the region from the discharge start voltage up to 4.1 V, and the second region may represent the region from 4.1 V to 3.9 V.

According to exemplary embodiments, the peak area ratio may be represented by Equation 1 below, and the peak area ratio may be 1 to 7.5. [Equation 1] $Peak area ratio = A 1 / A 2$

In Equation 1, A1 denotes the peak area value of the region from a predetermined discharge start voltage to 4.1 V in a discharge graph representing the change in charge (dQ/dV) according to the voltage (V) drop while discharging from the predetermined discharge start voltage of the lithium secondary battery, and A2 denotes the peak area value of the region from 4.1 V to 3.9 V in the discharge graph.

Within the above range of the peak area ratio, improved energy density, output characteristics, and cycle life characteristics of the lithium secondary battery may be achieved. For example, if the peak area ratio deviates from the above range, heat loss and power loss may occur during the discharge process, and the operating voltage at low temperatures may decrease, which may degrade the cycle life characteristics of the lithium secondary battery.

According to some embodiments, the peak area ratio may be 1.5 to 7, 1.75 to 6.5, 1.9 to 6, 2 to 5.5, 2.5 to 5.5, 2.5 to 4.5, or 3 to 4.5. Within this range of the peak area ratio, the energy density, output characteristics, and cycle life characteristics of the lithium secondary battery may be further improved.

The invention relates also to the following numbered aspects:
Asepect 1: A lithium secondary battery comprising:
   a cathode comprising a cathode active material including first lithium-metal oxide particles containing iron and second lithium-metal oxide particles containing nickel; and
   an anode disposed opposite the cathode,
   wherein the peak area ratio according to Equation 1 below is 1 to 7.5: [Equation 1] $Peak area ratio = A 1 / A 2$
   (in Equation 1, A1 denotes the peak area value of the region from a predetermined discharge start voltage to 4.1 V in a discharge graph representing the change in charge (dQ/dV) according to the voltage (V) drop while discharging from the predetermined discharge start voltage of the lithium secondary battery, and A2 denotes the peak area value of the region from 4.1 V to 3.9 V in the discharge graph).
Aspect 2: The lithium secondary battery according to aspect 1, wherein the discharge start voltage is 4.3 V, and the discharge is a constant-current discharge at 0.1C.
Aspect 3: The lithium secondary battery according to any one of aspects 1 to 2, wherein the weight ratio of the content of the second lithium-metal oxide particles to the content of the first lithium-metal oxide particles is 0.3 to 2.5.
Aspect 4: The lithium secondary battery according to any one of aspects 1 to 3, wherein the content of the first lithium-metal oxide particles is 30% by weight to 70% by weight based on the total weight of the cathode active material.
Aspect 5: The lithium secondary battery according to any one of aspects 1 to 4, wherein the first lithium-metal oxide particles further comprise at least one of Mn, Ti and V.
Aspect 6: The lithium secondary battery according to any one of aspects 1 to 5, wherein the first lithium-metal oxide particles comprise a core doped with at least one of Mn, Ti and V, and a carbon coating formed on the core.
Aspect 7: The lithium secondary battery according to any one of aspects 1 to 6, wherein the first lithium-metal oxide particles comprise manganese, and a molar percentage of the manganese content relative to the total content of iron and manganese is 40% to 80%.
Aspect 8.The lithium secondary battery according to any one of aspects 1 to 7, wherein the second lithium-metal oxide particles further comprise at least two of Co, Mn, Al, Na, Ca, Nb, Ta, Mo, Zr, Ti, Cr, Cu, Zn, Sn, Ge, Ga, B, Mg, Ba, Si, Y, W, V and Sr.
Aspect 9. The lithium secondary battery according to any one of aspects 1 to 8, wherein the second lithium-metal oxide particles have the form of a secondary particle in which primary particles are agglomerated.
Aspect 10: The lithium secondary battery according to aspect 9, wherein the second lithium-metal oxide particles comprise a first element present at grain boundaries of the primary particles and within the primary particles, and
   the first element comprises at least one of Al, Ga, V, Nb, Ta, Ti, Zr, Mg, Ca, Sr, Ba, Sc and Y.
Aspect 11:The lithium secondary battery according to any one of aspects 1 to 10, wherein the second lithium-metal oxide particles comprise a second element present on the outer surface of the secondary particle, and
   the second element comprises at least one of B, Si, Fe, Cu, Zn, Cr, Mo and W.
Aspect 12: The lithium secondary battery according to any one of aspects 1 to 11, wherein the second lithium-metal oxide particles comprise cobalt and manganese, and the molar percentage of the nickel content relative to the total content of nickel, cobalt, and manganese is 70% to 95%.
Aspect 13: The lithium secondary battery according to any one of aspects 1 to 12, wherein the peak area ratio is 2 to 5.5.
Aspect 14: The lithium secondary battery according to any one of aspects 1 to 13, wherein the first lithium-metal oxide particles have a median particle diameter (D50) of 0.5 µm to 2 µm.
Aspect 15:The lithium secondary battery according to any one of aspects 1 to 14, wherein the second lithium-metal oxide particles have a median particle diameter (D50) of 10 µm to 20 µm.

Hereinafter, specific experimental examples are provided to facilitate understanding of the present disclosure, however, these are merely illustrative of the present disclosure and are not intended to limit the scope of the appended claims, and it will be apparent to those skilled in the art that various changes and modifications may be made within the scope and technical spirit of the present disclosure, and such changes and modifications are to be regarded as falling within the scope of the appended claims.

### Example 1

### (1) Fabrication of cathode

### Preparation of First Lithium-Metal Oxide Particles

Lithium hydroxide (LiOH·H₂O), iron oxalate (FeC₂O₄·2H₂O), manganese oxalate (MnC₂O₄·2H₂O), ammonium dihydrogen phosphate (NH₄H₂PO₄), titanium oxide (TiO₂), and vanadium oxide (V₂O₅) were put into distilled water and dissolved and dispersed by stirring at 10,000 rpm for 30 minutes using a high-shear mixer (IKA). Further, a predetermined amount of citric acid was additionally added. The lithium hydroxide (LiOH·H₂O), iron oxalate (FeC₂O₄·2H₂O), manganese oxalate (MnC₂O₄·2H₂O), and ammonium dihydrogen phosphate (NH₄H₂PO₄) were added such that their molar ratio was 1:0.4:0.6:1. The TiO₂ and V₂O₅ were added such that their content based on the total weight of the first lithium-metal oxide particles being prepared was 1,000 ppm and 1,000 ppm, respectively.

Lactose powder was added to the mixed solution and stirred. The lactose powder was added such that its content based on the total weight of the first lithium-metal oxide particles being prepared was 8 wt%.

Subsequently, distilled water was removed by spray drying, the resultant was calcined in a nitrogen atmosphere at approximately 600 °C for about 6 hours, and then classified and de-ironed to prepare the first lithium-metal oxide particles.

### Preparation of Second Lithium-Metal Oxide

Lithium hydroxide (LiOH·H₂O), Ni_{0.88}Co_{0.06}Mn_{0.06}(OH)₂ as a transition metal precursor, strontium hydroxide (Sr(OH)₂·8H₂O), zirconium hydroxide (Zr(OH)₂), and aluminum hydroxide (Al(OH)₃) were introduced into a dry high-speed mixer and mixed. The lithium hydroxide (LiOH·H₂O) and Ni_{0.88}Co_{0.06}Mn_{0.06}(OH)₂ were introduced such that their molar ratio was 1.05:1. The Sr(OH)₂ and Zr(OH)₂ were introduced such that their content based on the total weight of the second preliminary lithium-metal oxide particles being prepared was 1,000 ppm and 1,000 ppm, respectively.

The mixture was put into a calcination furnace and calcined for 10 hours in an oxygen atmosphere at approximately 800 °C, followed by fine pulverization using a jet mill to obtain the second preliminary lithium-metal oxide particles.

The second preliminary lithium-metal oxide particles, boron trioxide (B₂O₃), and tungsten oxide (WO₃) were introduced into a dry high-speed mixer and mixed uniformly for 5 minutes. B₂O₃ and WO₃ were added such that their content based on the total weight of the second preliminary lithium-metal oxide particles was 1,000 ppm each.

The mixture was put into a calcination furnace and calcined for 10 hours in an oxygen atmosphere at approximately 700 °C. After the calcination was completed, the mixture was allowed to cool naturally to room temperature, and then pulverized and classified to obtain the second lithium-metal oxide particles.

### Preparation of Cathode Active Material and Cathode

The first lithium-metal oxide particles (D50: 1.10 µm) and the second lithium-metal oxide particles (D50: 11.2 µm) were mixed in a weight ratio of 5:5 to prepare a cathode active material.

97 wt% of the cathode active material, 2 wt% of PVDF, and 1 wt% of carbon nanotubes were introduced into a solvent (N-methyl-2-pyrrolidone; NMP) and stirred to prepare a cathode slurry.

The cathode slurry was coated onto an aluminum foil having a thickness of 12 µm, dried at 130 °C, and roll-pressed to fabricate the cathode. The density of the fabricated cathode was 2.95 g/cc.

### (2) Manufacture of Secondary Battery

97.10 wt% of artificial graphite, 0.08 wt% of single-walled carbon nanotubes (SWCNTs), 1.50 wt% of styrene-butadiene rubber (SBR), 1.20 wt% of carboxymethyl cellulose (CMC), and 0.12 wt% of cellulose-based dispersant were mixed to prepare an anode slurry. The anode slurry was coated onto a copper substrate, dried, and roll-pressed to fabricate the anode.

The cathode and anode were notched to a predetermined size and stacked, with a separator (polyethylene, thickness: 15 µm) interposed between the cathode and the anode to form an electrode cell, and then the tab portions of the cathode and anode were welded, respectively. The assembly of the welded cathode/separator/anode was placed into a pouch, and three sides of the pouch were sealed, leaving one side open for electrolyte injection. In this case, the portion having the electrode tab was included in the sealed part. After injecting the electrolyte through the electrolyte injection side, the remaining electrolyte injection side was also sealed, and the cell was allowed to be impregnated for 12 hours or more to manufacture a lithium secondary battery.

A solution, prepared by dissolving 1 M LiPF₆ in a mixed solvent of EC/EMC (volume ratio of 25:75), and then adding 1 wt% of vinylene carbonate (VC), 0.5 wt% of 1,3-propene sulfone (PRS), and 0.5 wt% of lithium bis(oxalato)borate (LiBOB), was used as the electrolyte.

### (3) Measurement of Peak Area Ratio

The secondary battery was charged (CC-CV 0.1C 4.3 V 0.05C cut-off) and discharged (CC 0.1C 3.0 V cut-off) once. The peak area ratio was calculated according to Equation 1 below. [Equation 1] $Peak area ratio = A 1 / A 2$

In Equation 1, A1 denotes the peak area value of the region from a predetermined discharge start voltage to 4.1 V in a discharge graph representing the change in charge (dQ/dV) according to the voltage (V) drop while discharging from the predetermined discharge start voltage of the lithium secondary battery, and A2 denotes the peak area value of the region from 4.1 V to 3.9 V in the discharge graph.

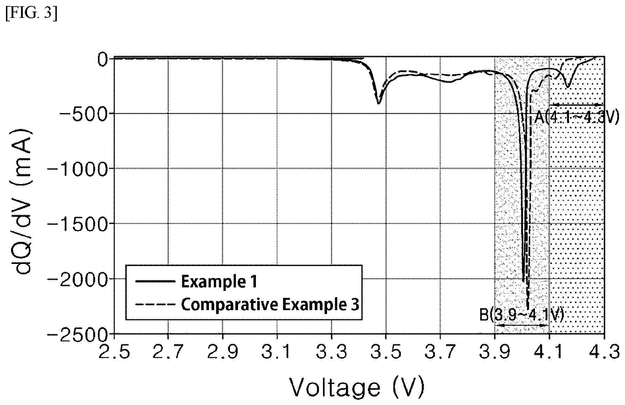

The discharge graph according to Example 1 and Comparative Example 3 is shown in FIG. 3.

### Examples 2 to 11

A secondary battery was manufactured in the same manner as in Example 1, except that the composition, content, and the like, of each of the first lithium-metal oxide particles and the second lithium-metal oxide particles were changed as shown in Table 1 below.

### Comparative Examples 1 to 5

A secondary battery was manufactured in the same manner as in Example 1, except that the composition, content, and the like, of each of the first lithium-metal oxide particles and the second lithium-metal oxide particles were changed as shown in Table 1 below.

**[TABLE 1]**

| Category | First lithium-metal oxide particle | | | Secondary lithium-metal oxide particle | | | Mixing ratio ³⁾ | Peak area ratio |
|---|---|---|---|---|---|---|---|---|
| | Mn¹⁾ (%) | Dopant | Coating | Ni²⁾ (%) | Dopant | Coating | | |
| Example 1 | 60 | Ti, V | C | 88 | Al, Zr, Sr | B, W | 50:50 | 4.3 |
| Example 2 | 60 | Ti, V | C | 88 | Al, Zr, Sr | B, W | 70:30 | 6.6 |
| Example 3 | 60 | Ti, V | C | 88 | Al, Zr, Sr | B, W | 30:70 | 3.8 |
| Example 4 | 60 | Ti | C | 88 | Al, Zr | B, W | 50:50 | 7.0 |
| Example 5 | 60 | Ti, V | C | 88 | Al, Zr, Y | B | 50:50 | 5.5 |
| Example 6 | 60 | Ti | C | 88 | Al, Zr | B,W | 50:50 | 7.4 |
| Example 7 | 60 | Ti, V | C | 88 | Al, Zr | B | 50:50 | 7.2 |
| Example 8 | 50 | Ti, V | C | 88 | Al, Zr, Sr | B, W | 50:50 | 5.3 |
| Example 9 | 70 | Ti, V | C | 88 | Al, Zr, Sr | B, W | 50:50 | 4.7 |
| Example 10 | 60 | Ti, V | C | 80 | Al, Zr, Sr | B, W | 50:50 | 2.6 |
| Example 11 | 60 | Ti, V | C | 70 | Al, Zr, Sr | B, W | 50:50 | 1.3 |
| Comparative Example 1 | 60 | - | - | 88 | - | - | 50:50 | 15.2 |
| Comparative Example 2 | 60 | Ti, V | C | 60 | Al, Zr, Y | B | 50:50 | 0.3 |
| Comparative Example 3 | 60 | Ti | C | 88 | Al | B | 50:50 | 9.8 |
| Comparative Example 4 | 30 | Ti, V | C | 88 | Al, Zr, Y | B | 50:50 | 10.8 |
| Comparative Example 5 | 60 | Ti, V | C | 88 | Al, Zr, Sr | B, W | 80:20 | 9.9 |
| Comparative Example 6 | 60 | Ti, V | C | 88 | Al, Zr, Sr | B, W | 20:80 | 12.2 |

In Table 1,
1) Mn represents the percentage of the mole fraction of manganese (Mn/(Mn+Fe)) among manganese and iron.
2) Ni represents the percentage of the mole fraction of nickel (Ni/(Ni+Mn+Co)) among nickel, manganese and cobalt.
3) The mixing ratio represents the weight ratio of the first lithium-metal oxide particles to the second lithium-metal oxide particles.

### Experimental Example. Analysis of Lithium Precursor

### (1) Measurement of Initial Capacity Efficiency

For the secondary batteries of the examples and comparative examples, charging (CC-CV 0.1C 4.3 V 0.05C cut-off) and discharging (CC 0.1C 3.0 V cut-off) were performed once at 25°C to measure the initial capacity efficiency.

### (2) Measurement of Rate Characteristics

Rate characteristics were measured for the secondary batteries of the examples and comparative examples by repeatedly charging (4.3 V cut-off) and discharging (3.0 V cut-off).

Specifically, the secondary batteries were charged once at 0.33C and discharged once at 0.1C (1st), charged once at 1C and discharged once at 0.1C (2nd), and charged once at 2C and discharged once at 0.1C (3rd). The rate characteristics were measured by measuring the C-rate during each charge and discharge.

### (3) Measurement of Room-Temperature Cycle Life Characteristics and Low-Temperature Cycle Life Characteristics

The room-temperature cycle life characteristics were measured for the secondary batteries of the examples and comparative examples by repeatedly charging and discharging at 25 °C, and the low-temperature cycle life characteristics were measured by repeatedly charging and discharging at -7 °C.

Specifically, after repeating charging (CC-CV 0.33C 4.3 V 0.05C cut-off) and discharging (CC 0.33C 2.7 V cut-off) 50 times in a chamber at the respective temperatures, the discharge capacity at the 50th cycle was calculated as a percentage (%) relative to the discharge capacity at the 1st cycle to calculate the capacity retention after 50 cycles.

### (4) DSC Measurement

The exothermic heat of the secondary batteries of the examples and comparative examples according to temperature was measured using differential scanning calorimetry (DSC).

The results according to the experimental examples are shown in Table 2 below.

**[TABLE 2]**

| Category | Initial capacity efficiency (%) | Rate characteristics (%) | | | Cycle life characteristics (%) | | Exothermic heat | |
|---|---|---|---|---|---|---|---|---|
| | | 1st | 2nd | 3rd | Room temper ature | Low temper ature | Onset temper ature (°C) | Exothermic heat (J/g) |
| Example 1 | 93.6 | 95.9 | 92.5 | 88.4 | 98.2 | 73.5 | 235 | 478 |
| Example 2 | 94.9 | 95.7 | 92.2 | 88.1 | 98.5 | 72.1 | 226.5 | 581 |
| Example 3 | 93.1 | 96.0 | 92.5 | 88.3 | 97.9 | 73.2 | 237.2 | 451 |
| Example 4 | 92.0 | 95.0 | 93.2 | 88.0 | 98.1 | 70.2 | 237 | 603 |
| Example 5 | 94.5 | 95.8 | 92.8 | 88.5 | 97.9 | 73.2 | 230 | 459 |
| Example 6 | 92.1 | 93.8 | 92.9 | 88.2 | 98.1 | 70.2 | 230.1 | 589 |
| Example 7 | 92.5 | 95.1 | 93.0 | 87.8 | 98.0 | 71.1 | 232.2 | 598 |
| Example 8 | 93.9 | 96.0 | 92.5 | 88.2 | 98.1 | 73.4 | 234 | 464 |
| Example 9 | 94.0 | 95.8 | 92.6 | 88.4 | 98.4 | 73.3 | 230 | 483 |
| Example 10 | 93.8 | 96.0 | 92.3 | 88.2 | 97.8 | 73.0 | 236.5 | 495 |
| Example 11 | 92.5 | 95.5 | 92.1 | 87.5 | 97.2 | 70.5 | 235.2 | 611 |
| Comparative Example 1 | 90.1 | 94.2 | 90.8 | 87.0 | 97.1 | 62.3 | 225.1 | 651 |
| Comparative Example 2 | 91.8 | 95.2 | 91.9 | 87.2 | 97.5 | 65.7 | 224.7 | 652 |
| Comparative Example 3 | 91.5 | 94.8 | 91.5 | 86.9 | 96.2 | 62.9 | 220.5 | 622 |
| Comparative Example 4 | 92.2 | 95.1 | 91.5 | 86.5 | 96.9 | 66.9 | 225.5 | 631 |
| Comparative Example 5 | 91.9 | 95.5 | 92.0 | 87.3 | 97.6 | 67.3 | 230.5 | 670 |
| Comparative Example 6 | 91.5 | 94.5 | 91.5 | 87.3 | 97.6 | 63.5 | 233.2 | 667 |

Referring to Table 2, the initial capacity efficiency and rate characteristics were improved in the secondary batteries according to the examples. In addition, the room-temperature/low-temperature cycle life characteristics were improved, and the exothermic heat was decreased.

In the secondary batteries according to the comparative examples, the initial capacity efficiency and rate characteristics were degraded. In addition, the room-temperature/low-temperature cycle life characteristics were degraded, and the exothermic heat was increased.

## Claims

1. A lithium secondary battery comprising:
a cathode comprising a cathode active material including first lithium-metal oxide particles containing iron and second lithium-metal oxide particles containing nickel; and
an anode disposed opposite the cathode,
wherein the peak area ratio according to Equation 1 below is 1 to 7.5: [Equation 1] $Peak area ratio = A 1 / A 2$
(in Equation 1, A1 denotes the peak area value of the region from a predetermined discharge start voltage to 4.1 V in a discharge graph representing the change in charge (dQ/dV) according to the voltage (V) drop while discharging from the predetermined discharge start voltage of the lithium secondary battery, and A2 denotes the peak area value of the region from 4.1 V to 3.9 V in the discharge graph).

2. The lithium secondary battery according to claim 1, wherein the discharge start voltage is 4.3 V, and the discharge is a constant-current discharge at 0.1C.

3. The lithium secondary battery according to any one of claims 1 to 2, wherein the weight ratio of the content of the second lithium-metal oxide particles to the content of the first lithium-metal oxide particles is 0.3 to 2.5.

4. The lithium secondary battery according to any one of claims 1 to 3, wherein the content of the first lithium-metal oxide particles is 30% by weight to 70% by weight based on the total weight of the cathode active material.

5. The lithium secondary battery according to any one of claims 1 to 4, wherein the first lithium-metal oxide particles further comprise at least one of Mn, Ti and V.

6. The lithium secondary battery according to any one of claims 1 to 5, wherein the first lithium-metal oxide particles comprise a core doped with at least one of Mn, Ti and V, and a carbon coating formed on the core.

7. The lithium secondary battery according to any one of claims 1 to 6, wherein the first lithium-metal oxide particles comprise manganese, and a molar percentage of the manganese content relative to the total content of iron and manganese is 40% to 80%.

8. The lithium secondary battery according to any one of claims 1 to 7, wherein the second lithium-metal oxide particles further comprise at least two of Co, Mn, Al, Na, Ca, Nb, Ta, Mo, Zr, Ti, Cr, Cu, Zn, Sn, Ge, Ga, B, Mg, Ba, Si, Y, W, V and Sr.

9. The lithium secondary battery according to any one of claims 1 to 8, wherein the second lithium-metal oxide particles have the form of a secondary particle in which primary particles are agglomerated.

10. The lithium secondary battery according to claim 9, wherein the second lithium-metal oxide particles comprise a first element present at grain boundaries of the primary particles and within the primary particles, and
the first element comprises at least one of Al, Ga, V, Nb, Ta, Ti, Zr, Mg, Ca, Sr, Ba, Sc and Y.

11. The lithium secondary battery according to any one of claims 1 to 10, wherein the second lithium-metal oxide particles comprise a second element present on the outer surface of the secondary particle, and
the second element comprises at least one of B, Si, Fe, Cu, Zn, Cr, Mo and W.

12. The lithium secondary battery according to any one of claims 1 to 11, wherein the second lithium-metal oxide particles comprise cobalt and manganese, and the molar percentage of the nickel content relative to the total content of nickel, cobalt, and manganese is 70% to 95%.

13. The lithium secondary battery according to any one of claims 1 to 12, wherein the peak area ratio is 2 to 5.5.

14. The lithium secondary battery according to any one of claims 1 to 13, wherein the first lithium-metal oxide particles have a median particle diameter (D50) of 0.5 µm to 2 µm.

15. The lithium secondary battery according to any one of claims 1 to 14, wherein the second lithium-metal oxide particles have a median particle diameter (D50) of 10 µm to 20 µm.
